# EUROPEAN PATENT APPLICATION

(11) **EP 1 669 434 A1**
(43) Date of publication of application: **14.06.2006**
(21) Application number: 05076198.0
(22) Date of filing: 23.05.2005
(51) Int. Cl.: C10L 5/46, C10L 5/44

(54) **Method and installation for conversion into fuel of organic material originating for instance from domestic waste**

(30) Priority: 13.12.2004 NL 1027726
(71) Applicant: NedCoal Patent B.V. i/o, 8024 HB Zwolle (NL)
(72) Inventor: Jansen, Abraham, 8017 DH Zwolle (NL)
(74) Representative: Bartelds, Erik

(57) **Abstract**

A method is provided for converting organic material from domestic refuse into fuel for use in a pulverized coal power plant, comprising of mixing the organic material with at least one flammable material while adding binder, and pressing the mixture to form hard, relatively brittle agglomerates.

Further provided is an installation for converting organic material from domestic refuse into fuel, comprising a device for mixing the organic material with at least one flammable material while adding binder, and device for pressing the mixture to form hard, relatively brittle agglomerates.

## Description

The invention relates to a method for converting organic material into fuel. The invention relates particularly to a method with which the organic material can be converted into a type of fuel which can be ground to powder and is thereby suitable for burning in a pulverized coal power plant. In this application "organic material" is understood to include the combustible fraction of domestic refuse or equivalent industrial waste, so-called RDF (Refuse Derived Fuel). Fibrous material, such as for instance wood chippings, also falls however within this designation.

It is already known per se to convert domestic refuse into a fuel which can be used in electricity power plants. Compared to the combustion of unsorted waste in waste incineration plants (WIPs), this has the advantage that the combustion efficiency of an average power plant is considerably higher, while possibly reusable materials are moreover prevented from being burned together with the waste. A problem however is that costly additional measures and provisions are necessary for this purpose, while the thus formed fuel has a lower net heating value than coal, thereby reducing the output of the power plant.

In the non-pre-published Netherlands patent application 1026414 of applicant a method is already described wherein waste is first comprehensively dried and all kinds of non-combustible or otherwise disruptive fractions are removed. The non-combustible fractions contain reusable materials such as metal and glass, which can thus be recovered. The combustible or RDF fraction is then mixed with a flammable material and a binder and pressed to form granules.

The heretofore known methods, including that of the above stated patent application, have the drawback that not only the non-combustible fractions, but also per se combustible materials such as wood or plastics, have to be separated from the waste before it can be mixed with flammable material and pressed to form granules. This is because it must be possible to grind the fuel granules to powder, like coal, to enable their use in a modern high-efficiency electricity power plant. If granules obtained with the methods now known were to be ground, just as coal, in ball mills, but then without prior separation of plastics and wood, the plastics and wood would as it were be smeared, and the filters of the ball mills would become blocked.

The separation of materials such as wood and plastics does however require one or more additional steps, whereby the known methods are relatively time-consuming, complex and expensive.

The invention therefore has for its object to improve these known methods such that it is possible to dispense with the separation of plastics and/or wood from the waste before this latter is mixed with flammable material and pressed to form granules. The invention provides for this purpose a method for converting organic material, in particular from domestic refuse, into fuel, particularly for use in a pulverized coal power plant, comprising of mixing the organic material with at least one flammable material while adding binder, and pressing the mixture to form hard, relatively brittle agglomerates.

By pressing the mixture such that hard and brittle agglomerates are created, these products of the pressing process can be admixed directly to coal and pulverized together therewith and fed to the furnace of a high-efficiency electricity power plant. Owing to the strong compressing thereof, with pressures which can be in the order of 30 MPa, the agglomerates have a long storage life and can, like coal, be stored outside.

In addition to purely organic material, such as for instance wood, the method can also be applied, as stated, with organic material obtained from domestic or industrial waste. The organic material is then advantageously obtained from domestic waste by removing non-combustible fractions and/or by drying the waste.

In order to achieve an optimal mixing of the organic material with the flammable material, the organic material is preferably reduced in size prior to mixing.

A fuel with a high calorific value is obtained when the flammable material is a material with a high carbon content.

In order to ensure a good binding between the different materials and to obtain highly cohesive agglomerates, the binder is preferably adapted to the nature of the materials for mixing.

So as to achieve a sufficient measure of compression, it is recommended that the mixture is pressed more than once.

It is also advisable for the purpose of obtaining hard and brittle agglomerates that the mixture be pressed at increased temperature. It is possible here to envisage temperatures in the order of 60 to 160°C, preferably 80 to 140°C and more preferably 100 to 120°C.

An efficient, energy-saving pressing is achieved when the mixture is pressed in a pellet press with flat die.

In order to enable high-efficiency combustion of the resulting agglomerates, the resulting agglomerates are preferably ground to powder before being fed to a furnace of the pulverized coal power plant. A ball mill or wheel mill can for instance be used for this purpose, using which a powder with a maximum particle size in the order of a few hundred microns can be obtained from the agglomerates.

When the mixture has a composition and/or calorific value corresponding to that of coal, the fuel can be mixed with coal in a random ratio.

The invention also has for its object to provide an installation with which the above described method can be performed. According to the invention such an installation comprises a device for mixing the organic material with at least one flammable material while adding binder, and a device for pressing the mixture to form hard, relatively brittle agglomerates.

When the installation is provided with a device placed before the mixing device for the purpose of recovering organic material from domestic waste, which recovering device comprises means for removing non-combustible fractions and/or means for drying the waste, domestic refuse can hereby also be processed into fuel.

In addition, the installation can further be provided with a device for reducing the waste in size placed between the recovering device and the mixing device.

In order to enable feed of the different components of the fuel, the mixing device preferably comprises at least one inlet for organic material, at least one inlet for a flammable material and at least one inlet for a binder.

In order to achieve a sufficient measure of compression, it is recommended that the pressing device comprises a number of presses placed in series.

The pressing device can be provided, in addition or instead, with means for feeding at least a part of the pressed mixture back to its inlet.

The pressing device is further advantageously adapted to increase the temperature of the mixture.

These aspects are simple to realize structurally when the pressing device comprises at least one pellet press with flat die. Such pellet presses are commercially available from different suppliers, and enable high pressures and temperatures to be reached with relatively low energy consumption.

In addition, the pressing device is advantageously adapted to generate a pressure and temperature such that the thereby formed agglomerates can be ground to powder, for instance in a ball mill or wheel mill.

The invention will now be elucidated on the basis of an exemplary embodiment, with reference to the accompanying drawing, in which:
Fig. 1 is a flow diagram showing schematically the different steps of the method, and
Fig. 2 shows a cross-section of a pellet press for use in this method.

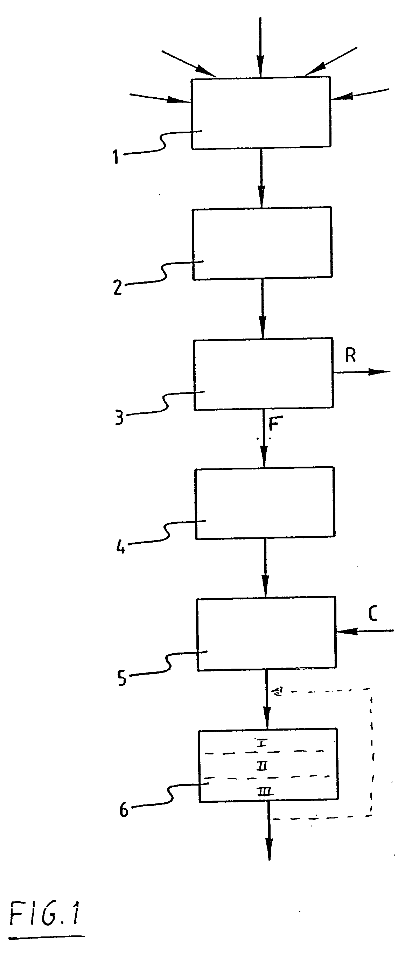

The conversion into fuel of organic material from for instance domestic refuse in the manner proposed by the invention begins with collecting the waste (Fig. 1, block 1). This collected waste is separated into one or more non-combustible, reusable fractions R, for instance metals, glass and/or minerals, and a fuel or RDF fraction F which, in addition to diverse other materials, can also contain plastics and/or wood (block 3). In order simplify separation, in the shown embodiment the waste is dried before the separating step (block 2), for instance to a dry basis content (d.b.) of more than 80%, and preferably more than 85%. The waste must in any case be dried to the extent that the moisture content in the fuel fraction amounts to a maximum of 13%. Once the reusable fractions R have been separated from fuel fraction F, they are discharged so that they can be reused. Up to this point the processing is substantially conventional.

In order to make the fuel fraction F suitable for burning in efficient manner, and therefore be able to serve as substitute or additional fuel in high-efficiency power plants, in particular pulverized coal power plants, the invention proposes to refine fuel fraction F. This refining of fuel fraction F begins with reducing thereof in size, for instance to a particle size of a maximum of 10 mm and preferably a maximum of 5 mm (block 4).

This reduction is important because a first aspect of the invention provides for an increase in the calorific value of fuel fraction F by admixing flammable material C thereto (block 5). Once the flammable material C has been admixed to the reduced residual waste, according to a second aspect of the invention this mixture is compressed to form agglomerates, for instance granules or pellets (block 6), whereby not only the calorific value per unit of volume increases further, but also the hardness and brittleness.

The materials which according to the invention can be admixed to the organic material to increase the calorific value thereof are of very diverse nature. In the first place materials with a high carbon content can be added, for instance in the form of ground coke or pure pulverized carbon. Low-sulphur petroleum coke is recommended in this respect. In addition, combustible natural materials in accordance with the biomass list, for instance agricultural products from surpluses, can be added in order to increase the available quantity of fuel at low cost. A binder is further added in order to make a cohesive whole of the different stated components. This binder is adapted to the nature of the materials in the mixture, and can for instance be a cellulose binder, or at least a binder based on substances originating from cellulose.

The coke can for instance form 20-50% by weight, preferably 30-40% by weight and most preferably 32% by weight of the mixture, while the content of binder can be 1-20% by weight, preferably 5-14% by weight and most preferably 8% by weight. In this composition the calorific value of the mixture approximates that of coal. The elementary composition itself also approximates that of coal, with a slightly higher content of volatile constituents and a slightly lower content of ash. The combustion behaviour then corresponds with that of a qualitatively high-grade coal, i.e. higher than a medium-volatile bituminous coal.

The elementary composition of the thus obtained fuel can vary with the supply of the basic materials. An example of average overall composition can be found in the table below:

| Specification | | NedCoal range of overall values | |
|---|---|---|---|
| | unit | low | high |
| Form | | Solid | |
| Bulk density | kg/m3 | 770 to | 790 |
| Density | kg/m3 | | |
| **Main elements** | % d.b. | | |
| C | | 60 to | 67 |
| H | | 5.2 to | 6.5 |
| N | | 1.1 to | 1.3 |
| S | | 1.5 to | 3 |
| O (remainder) | | 20 to | 23 |
| Water (% as received) | | 8 to | 11 |
| Volatile | | 40 to | 50 |
| ash content | | 8 to | 12 |
| net heating value (LHV) | MJ/kg | 22 to | 24 |
| Proportion of biomass | % d.b. | 55 to | 62 |
| **Macro-elements** | % d.b. | | |
| Al | | 1.2 to | 1.3 |
| Ca | | 1.6 to | 1.75 |
| Cl | | 0.2 to | 0.4 |
| Fe | | 0.2 to | 0.3 |
| K | | 0.07 to | 0.13 |
| Mg | | 0.06 to | 0.1 |
| Na | | 0.2 to | 0.3 |
| P | | | |
| Si | | 0.8 to | 1 |
| Ti | | 0.1 to | 0.15 |
| **Trace elements** | mg/kg d.b. | | |
| Heavy metals | | | |
| As | | < 0.7 | |
| Co | | 3 to | 8 |
| Cr | | 10 to | 40 |
| Cu | | 20 to | 80 |
| Mn | | 30 to | 60 |
| Ni | | 70 to | 150 |
| Pb | | 15 to | 80 |
| Sb | | 3 to | 25 |
| V | | 300 to | 550 |
| Ba | | 35 to | 60 |
| Be | | 0.1 to | 0.25 |
| Br | | | |
| Cd | | < 0.4 | |
| F | | 55 to | 70 |
| Hg | | < 0.2 | |
| Mo | | | |
| Se | | < 1.7 | |
| Sn | | 4 to | 7 |
| Te | | < 1.0 | |
| Zn | | 60 to | 130 |
| Ti | | < 0.35 | |

As stated, the method is applicable not only to the fuel fraction of domestic refuse, but also to organic material from other sources, for instance wood residues. When such more or less purely organic material is taken as starting point, the above described steps 2 and 3 of the method can of course be omitted.

In order to enable admixture to coal of the mixture still containing plastics and wood in fuel fraction F in order to function as fuel in a high-efficiency power plant, processing, in particular grinding, thereof must be possible in the same manner as for coal. The invention proposes for this purpose very strong compression of the mixture, whereby the plastics and the wood become hard and brittle, and so no longer smeared during grinding. It is important in this respect that the pressure and temperature during pressing rise so high and are held for a time at a high value such that particularly the plastics and the fibrous materials undergo a change in structure. In combination with the addition of the binder, this change in structure results in a high degree of hardness and brittleness and a long storage life of the agglomerates formed by pressing. Suitable values for the temperature lie in the order of 60 to 160°C, preferably 80 to 140°C, and more preferably 100 to 120°C. The pressure advantageously lies in the range of 20 to 45 MPa, preferably between 25 and 40 MPa, and most preferably between 29 and 34 MPa.

In order to achieve this while making use of relatively simple pressing equipment and with the supply of a relatively small amount of energy, the invention proposes to perform the pressing in a plurality of steps. The mixture can for instance be carried successively through a number of presses placed in series (indicated schematically by the subdivision of block 6), but it is also possible to envisage the mixture being fed back, after the first pressing operation, one or more times to the inlet of the press (indicated schematically with a broken line).

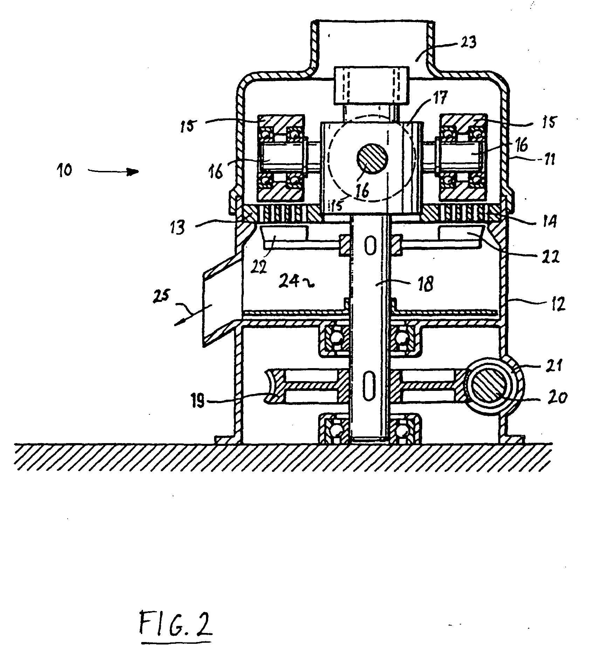

A pellet press with flat die is preferably used as press. This is a robust press apparatus which enables a relatively long processing time in the press of the material for pressing. In the shown embodiment pellet press 10 (Fig. 2) comprises a housing which consists of an upper part 11 and a lower part 12. Received in the housing is a flat, annular die 13 which is provided with a large number of press openings 14 arranged distributed therein. Moving over die 13 there are a number of press rollers 15, which are each rotatably mounted on the outer ends of a transverse shaft 16, which is mounted in turn on a head 17.

This head 17 is supported by a main shaft 18 which is rotatably mounted in the housing and which has on its underside a toothed wheel 19. This toothed wheel 19 is in engagement with a worm 20 which is driven rotatingly by a motor 21. Further fixed to the main shaft is a number of scraping knives 22 which move along the underside of die plate 13.

The housing is provided on its top side with an inlet opening 23, while a space 24 under die 13 communicates with an outlet opening 25.

The material for pressing is fed through inlet opening 23 to pellet press 10 and subsequently pressed by means of rollers 15 through openings 14 in die 13. The temperature and pressure in the material is increased considerably by the friction occurring here. As they leave these openings 14, the material strands formed therein are cut into pellets by scraping knives 22, these pellets finally leaving the press 10 via outlet opening 25. These pellets can optionally be fed back to inlet opening 23 of press 10, or can be guided to a subsequent press 10. Once the pellets have obtained a sufficient hardness and brittleness, they can be admixed to coal and further processed together therewith.

When the fuel is intended for use in a pulverized coal power plant, the further processing includes grinding the fuel pellets in a ball mill or wheel mill. This creates a powder which can have a particle size distribution as shown in the following table:

| | |
|---|---|
| Smaller than 75 µm | c. 65% |
| Smaller than 150 µm | c. 80% |
| Smaller than 300 µm | c. 100% |

The invention thus makes it possible with relatively simple means to convert organic material, which can for instance come from domestic refuse or equivalent industrial waste, into a fuel suitable for burning in high-efficiency power plants, for instance pulverized coal power plants, in addition to or even instead of coal. The thus formed fuel can of course also be used, even as primary fuel, in other power plants, for instance gasification installations, fluidized bed systems and grid boilers.

Although the invention has been elucidated here on the basis of an exemplary embodiment, it is not limited thereto, but can on the contrary be varied in many ways within the scope of the following claims.

## Claims

1. Method for converting organic material, in particular from domestic refuse, into fuel, particularly for use in a pulverized coal power plant, comprising of mixing the organic material with at least one flammable material while adding binder, and pressing the mixture to form hard, relatively brittle agglomerates.

2. Method as claimed in claim 1, **characterized in that** the organic material is obtained from domestic waste by removing non-combustible fractions and/or by drying the waste.

3. Method as claimed in claim 1 or 2, **characterized in that** the organic material is reduced in size prior to mixing.

4. Method as claimed in any of the foregoing claims, **characterized in that** the flammable material is a material with a high carbon content.

5. Method as claimed in any of the foregoing claims, **characterized in that** the binder is adapted to the nature of the materials for mixing.

6. Method as claimed in any of the foregoing claims, **characterized in that** the mixture is pressed more than once.

7. Method as claimed in any of the foregoing claims, **characterized in that** the mixture is pressed at increased temperature.

8. Method as claimed in any of the foregoing claims, **characterized in that** the mixture is pressed in a pellet press with flat die.

9. Method as claimed in any of the foregoing claims, **characterized in that** the resulting agglomerates are ground to powder before being fed to a furnace of the pulverized coal power plant.

10. Method as claimed in any of the foregoing claims, **characterized in that** the mixture has a composition and/or calorific value corresponding to that of coal.

11. Installation for converting organic material, in particular from domestic refuse, into fuel, particularly for use in a pulverized coal power plant, comprising a device for mixing the organic material with at least one flammable material while adding binder, and a device for pressing the mixture to form hard, relatively brittle agglomerates.

12. Installation as claimed in claim 11, **characterized by** a device placed before the mixing device for the purpose of recovering organic material from domestic waste, which recovering device comprises means for removing non-combustible fractions and/or means for drying the waste.

13. Installation as claimed in claim 12, **characterized by** a device for reducing the waste in size placed between the recovering device and the mixing device.

14. Installation as claimed in any of the claims 11-13, **characterized in that** the mixing device comprises at least one inlet for organic material, at least one inlet for a flammable material and at least one inlet for a binder.

15. Installation as claimed in any of the claims 11-14, **characterized in that** the pressing device comprises a number of presses placed in series.

16. Installation as claimed in any of the claims 11-15, **characterized in that** the pressing device is provided with means for feeding at least a part of the pressed mixture back to its inlet.

17. Installation as claimed in any of the claims 11-16, **characterized in that** the pressing device is adapted to increase the temperature of the mixture.

18. Installation as claimed in any of the claims 11-17, **characterized in that** the pressing device comprises at least one pellet press with flat die.

19. Installation as claimed in any of the claims 11-18, **characterized in that** the pressing device is adapted to generate a pressure and temperature such that the thereby formed agglomerates can be ground to powder.
